# EUROPEAN PATENT SPECIFICATION

(11) **EP 3 814 589 B1**
(45) Date of publication and mention of the grant of the patent: **26.10.2022**
(21) Application number: 19737670.0
(22) Date of filing: 26.06.2019
(51) Int. Cl.: E04H 15/20

(54) **INSULATED TARPAULIN**
ISOLIERTE PLANE
BÂCHE ISOLÉE

(30) Priority: 28.06.2018 NO 20180916
(43) Date of publication of application: 05.05.2021
(73) Proprietor: HALLGRUPPEN AS, 2016 Frogner (NO)
(72) Inventor: DALGAARD, Lars, 2016 Frogner (NO); ERIKSSON, Thomas, 2040 Kløfta (NO)
(74) Representative: Protector IP AS
(86) International application number: PCT/EP2019/067032
(87) International publication number: WO 2020/002446

(56) References cited:
- WO-A1-85/04211
- CH-A- 521 499
- DE-A1- 2 931 945
- US-A- 4 038 788

## Description

### Technical Field

The present invention relates to the field of insulated tarpaulins used for erecting temporary or permanent constructions, such as halls or other buildings. Such insulated tarpaulins are typically arranged to cover a truss work or frame work that substantially defines the shape and size of the building. Constructions erected with insulated tarpaulins are relatively cheap while still capable of maintaining a desired temperature inside the construction.

### Background Art

WO1985004211 discloses a protective shelter in the form of an inflatable tent, having an inner and outer sheet defining a space between them. The space can be filled with rock wool for insulating the tent. In the occurrence of a fire, typically a bush fire, a heat-sensitive valve is opened to let pressurized gas fill the space between the sheets.

NO315752 discloses an insulated tarpaulin having an inner and an outer sheet defining a space between them. In this space, there are arranged a plurality of insulating elements, typically in the form of mats or loose mass. To retain the insulating elements in position between the inner and outer sheets, there is further provided intermediate barrier elements between the sheets. The intermediate barrier elements divide the space into separate spaces. Furthermore, to make it possible to insert and remove the insulating elements, there are provided a plurality of openings in the sheets themselves, through which the insulating elements can be transported. According to this disclosure, this makes it possible to transport the tarpaulin and the insulating material separately to the erection site.

EP2494126 discloses another insulated tarpaulin having an inner and outer sheet that together define an intermediate space with an insulation. In this solution, there are also arranged means for retaining the insulation in place.

US2819724 an inflatable tent having an inner and outer sheet. The distance between the two sheets are governed by a plurality of threads that extend between them, across the chamber defined between the sheets.

WO 85/04211 A1 discloses an insulated tarpaulin according to the preamble of claim 1.

A disadvantage of the known insulated tarpaulins is that the insulating elements tend to creep, thereby loosing their original shape and effect. This applies in particular to elongated mats of insulating material, which are horizontally oriented. Due to gravity and often also due to movements in the tarpaulin, for instance during windy conditions, the vertical extension of the insulating elements are often reduced. This leaves a non-insulated portion of the space between the inner and outer sheets. Such non-insulated portions typically function as thermal bridges, severely reducing the overall insulating characteristics of the construction.

An object of the present invention may thus be to provide an insulated tarpaulin having an inner and outer sheet with an intermediate space, wherein the extension of the insulation is maintained to retain the insulation characteristics when used to insulate a construction.

Another object of the present invention may be to provide an insulated tarpaulin that is adapted for being transported to the erection site in a state where the insulation is already in place in the tarpaulin.

### Summary of invention

According to a first aspect of the present invention, there is provided an insulated tarpaulin comprising a first sheet, a second sheet, barriers located between and defining compartments between the first and second sheets, and insulation elements located in the compartments. The insulated tarpaulin further comprises apertures through the barriers. Furthermore, attachment means extend through the apertures and connect insulation elements to insulation elements located in other compartments.

Advantageously, the attachment means will connect insulation elements that are located in adjacent compartments. In some embodiments though, the attachment means may extend through several apertures in the barriers, such that they connect two insulation elements that are not located in immediately adjacent compartments.

In some embodiments, the second sheet can comprise a plurality of sheet pieces that are joined together at a position having a distance from a sheet piece barrier edge of the sheet pieces where the apertures are arranged. In that way, the second sheet is produced as an assembly of sheet pieces that are joined together. As will appear from the detailed description below, this may produce advantages during assembly of the insulated tarpaulin.

That the apertures may in the form of holes encircled by sheet material. In such embodiments, the apertures can be punched out from the sheet material, including removal of a part of the sheet. In other solutions, the apertures may be arranged as slits that are cut open in the sheet. In such solutions, one does not need to remove any sheet material.

Furthermore, in alternative embodiments the apertures can be formed as cutouts extending from the sheet piece barrier edge. In such embodiments, the sheet piece barrier edge is interrupted, thus being discontinuous.

In preferred embodiments of the present invention, the insulation elements can be compressible, and the insulated tarpaulin can comprise a closable fluid interface through which gas can be evacuated out from the compartments.

With such embodiments, one will be able to compress the insulated tarpaulin before transport to the erection site. Once at the erection site, one can expand the tarpaulin by letting air flow back into the compartments.

In some embodiments, the insulation elements can be provided with a pre-attached attachment means. Such pre-attached attachment means can for instance be straps that are glued, welded onto, or otherwise connected to the insulation elements before the tarpaulin is assembled.

With such an embodiment, with the attachment means already being attached to the insulation elements, one will only need to attach the attachment means to one other insulation element. In other embodiments, where the attachment means are not pre-attached to the insulation elements, one will have to attach the attachment means to two insulation elements during assembly of the tarpaulin.

In some embodiments of the present invention, the attachment means may extend across a plurality of insulation elements.

In such embodiments, the attachment means may advantageously be connected to a bar that is arranged at a bar edge of the insulated tarpaulin.

Some insulated tarpaulins according to the invention may have two such bars that are arranged at oppositely arranged bar edges, i.e. one on respective sides of the tarpaulin. The attachment means may then extend from one bar to the other bar.

According to a second aspect of the present invention, there is provided a method of providing an insulated tarpaulin, which method comprises the following steps:
providing a first sheet;
arranging an insulation element on the first sheet;
arranging a second sheet on the insulation element, so that the insulation element is arranged between the first and second sheets;
arranging a barrier along an edge of the insulation element, the barrier extending between the first sheet and the second sheet;
arranging an additional insulation element adjacent the previously arranged insulation element, such that the barrier is interposed between the two insulation elements;
connecting the two insulation elements together with a plurality of attachment means that extend from one insulation element, through apertures in the barrier, to the other insulation element; and
arranging the second sheet on the additional insulation element.

Also provided is an insulation element in the form of an elongated, rectangular shaped insulation mat having two parallel first edges and two parallel second edges, wherein the parallel first edges are longer than the parallel second edges. The insulation element comprises pre-attached attachment means along one of the first edges, configured to be connected to an additional insulation element arranged adjacent the insulation element. Advantageously, the insulation element can be made of a compressible insulating material. For instance, the insulation element may be an insulating mat comprising rock-wool or glass-wool.

### Brief description of drawings

While various features of the present invention have been discussed in general terms above, a more detailed and non-limiting example of embodiment will be given in the following with reference to the drawings, in which
- Fig.1: depicts a construction in the form of a hall comprising an insulated tarpaulin according to the present invention;
- Fig. 2: is a principle perspective view of an insulated tarpaulin according to the invention, with a part cut away for illustrational purpose;
- Fig. 3: is another principle perspective view similar to the view of Fig. 2, with some of the sheet removed for illustrational purpose;
- Fig. 4: is a further perspective view similar to the view of Fig. 3, where the extension of an insulation element is shown without a covering sheet;
- Fig. 5: is a cross section side view through a plurality of insulation elements that are connected with attachment means, shown without the sheets for illustrational purpose;
- Fig. 6: is a principle perspective view of an embodiment of the invention, where a second sheet and a plurality of barriers are assembled by a number of sheet pieces;
- Fig. 7: is perspective view of a portion of an insulated tarpaulin according to the invention, in an assembled state;
- Fig. 8: is a principle front view of a plurality of insulation elements connected together with attachment means, shown without the sheets for illustrational purpose;
- Fig. 9: is a perspective view of a sheet piece that can be used for assembly of a second sheet that is part of the tarpaulin according to the invention; and
- Fig. 10: is a schematic front view depicting insulation elements and attachment means according to an alternative embodiment of the invention.

### Detailed description of the invention

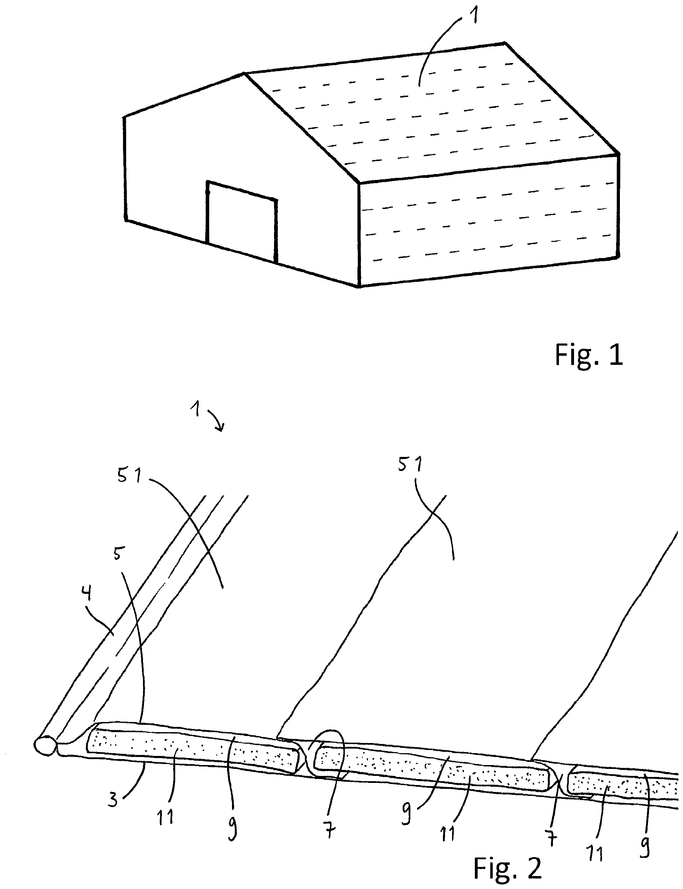

Fig. 1 depicts a hall that has been erected with a non-shown framework that is covered with an insulating tarpaulin 1 according to the invention. The tarpaulin 1 comprises a plurality of insulation elements that have an elongated shape, and which are horizontally oriented. The horizontal orientation is indicated with the broken lines.

In other embodiments, the insulation elements may extend with a vertical orientation.

Fig. 2 depicts an enlarged portion of an embodiment of a tarpaulin 1 according to the invention. The tarpaulin 1 has a first sheet 3 and a second sheet 5. Between the first and second sheets extend a plurality of barriers 7. The barriers 7 define together with the first and second sheets 3, 5 a plurality of compartments 9 that are positioned between the first and second sheets.

In the compartments 9 there are provided insulation elements 11. The insulation elements 11 can for instance be elongated mats of rock-wool, glass-wool, or any other suitable type of insulation.

Advantageously, the insulation elements 11 are of the type that can be temporarily compressed. This characteristic is advantageous since one can then transport the tarpaulin 1 in a compressed state. After transportation, the insulation elements 11 can be expanded back to their operational state. Typically, this will take place at the erection site.

As appears from Fig. 2, the second sheet 5 is made up of a plurality of sheet pieces 51 that are assembled together into the second sheet 5. This will be discussed in more detail further below.

Still referring to Fig. 2, the first and second sheets 3, 5 can typically be joined at an edge portion of the tarpaulin 1 that includes a bar. In Fig. 2 this edge is referred to as a bar edge 4.

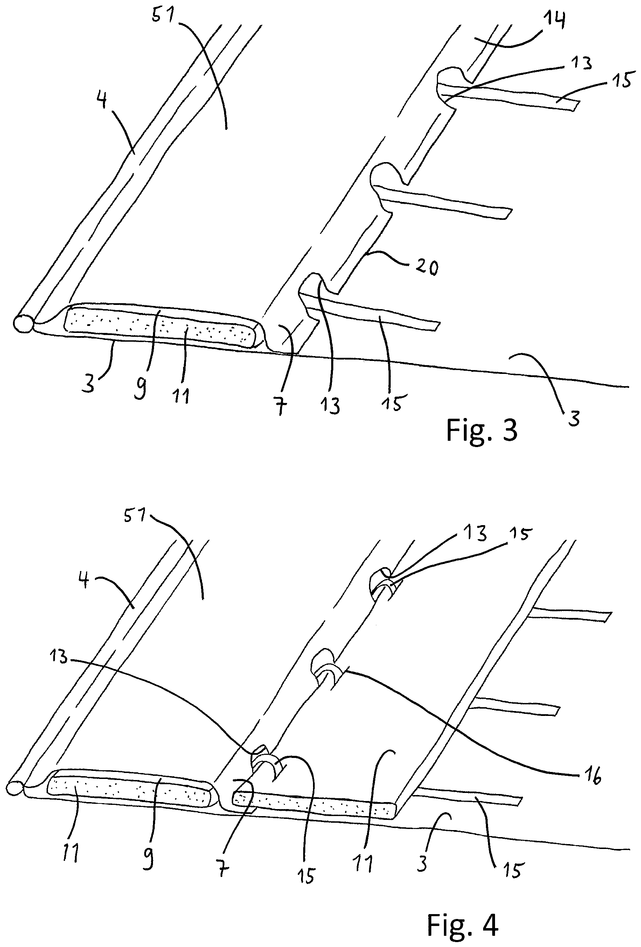

Reference is now made to Fig. 3, which for illustrational purpose depicts only one sheet piece 51 assembled on the first sheet 3. As appears from this drawing, the barrier 7 is made of an end portion of the sheet piece 51. The end portion is attached, such as by welding or with a glue, to the first sheet along a sheet piece barrier edge 20 of the sheet piece 51.

Furthermore, in the end portion, which constitutes the barrier 7, there are arranged a plurality of apertures 13. When the sheet pieces 51 are joined together into the larger portion constituting the second sheet 5, the apertures 13 will allow gas to communicate between adjacent compartments 9.

Moreover, as illustrated in Fig. 3, a plurality of attachment means, which in Fig. 3 is shown in form of attachment straps 15, extend through the aperture 13.

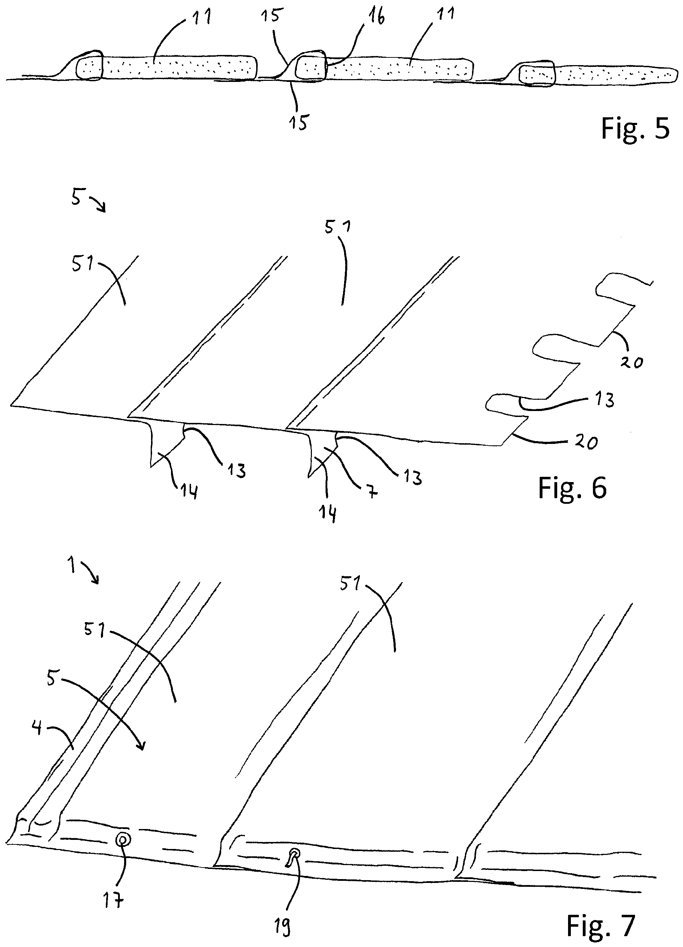

As is shown in Fig. 4, several attachment straps 15 are connected to the insulation element 11. As shown in the cross-section side view of Fig. 5, as well as in the perspective view of Fig. 4, the attachment straps 15 connect the insulation elements 11 together. Fig. 5 depicts the insulation elements 11 and the attachment straps 15 without the first and second sheets 3, 5 for illustrational purpose.

In the shown embodiment, each insulation element 11 is provided with attachment straps 15 that are pre-attached to the insulation element 11 along one of their edges. This appears well from Fig. 5. The attachment straps 15 are then guided through a slit 16 in the adjacent insulation element 11, and back again so that the end portion of the attachment strap 15 attaches to another part of the attachment strap 15. This attachment can for instance be provided with Velcro, a staple, an adhesive, a knot, or other suitable means.

Instead of an attachment strap 15, as shown in Fig. 3 to Fig. 5, other attachment means can also be provided. For instance, a thread, string, rope or similar means can be used to connect two adjacent insulation elements 11 together. The attachment means can then be guided through both insulation elements 11 and through the aperture 13 in the barrier 7. Further embodiments may include attachment means comprising an adhesive that will attach to the surface of the insulation elements.

Fig. 6 depicts an embodiment where the second sheet 5 is pre-assembled by a plurality of sheet pieces 51 before the insulated tarpaulin 1 is assembled. As appears from Fig. 6, the sheet pieces 51 are joined together, such as by welding or gluing, along respective longitudinal edge portions. The barriers 7 and apertures 13 are located along the sheet piece barrier edge 20.

The sheet piece barrier edge 20 is at a free end 14 of the sheet piece 51. When assembling the tarpaulin 1, one may then install a first insulation element 11 on the first sheet 3, and then attach the free end 14 to the first sheet 3, for instance by welding or with a glue. When doing so, one should advantageously let the attachment means, e.g. the attachment straps 15 extend through the apertures 13, so that they can be attached to the next insulation element 11 being installed.

While the apertures 13 of the shown embodiment is provided by arranging cut-outs along and including a portion of the edge of the sheet piece 51, it shall be understood that in other embodiments, the apertures 13 may be formed as holes through the sheet pieces 51 at a distance from the edge.

Moreover, in other embodiments, the second sheet 5 may be a continuous sheet that is not assembled in the manner disclosed in the drawings. Instead pieces of sheet may be attached to the inner side of the second sheet 5.

In some embodiments, the barrier 7 may be of another type than what is disclosed in the drawings. For instance, the barriers 7 may be in the form of a net (not shown) that extends between and is connected to the first and second sheets 3, 5. In alternative embodiments, the barrier may be constituted by straps, wire, or rope pieces extending between the inner and outer sheets 3, 5. The apertures 13 will then be constituted by the spaces between such straps. As the skilled person will appreciate, the barriers 7 need to allow for attachment means 15 to extend through it.

Fig. 7 depicts a portion of the final, assembled insulated tarpaulin 1. In the embodiment shown in Fig. 7, the tarpaulin 1 is provided with a closable fluid interface 17. The tarpaulin may comprise one or more such closable fluid interfaces 17.

When the tarpaulin 1 has been assembled, the edges of the first sheet 3 and the second sheet 5 along the perimeter of the tarpaulin are attached and sealed together. This can be done for instance by welding. The tarpaulin can then be compressed by pumping air out of the compartments 9, through the closable fluid interface 17.

The closable fluid interface 17 may be in form of a simple opening arranged with a lid that can seal the opening. In other embodiments, the closable fluid interface 17 may involve a one-way valve that will permit gas only to flow out of the tarpaulin 1. If the closable fluid interface 17 comprises a one-way valve, the tarpaulin should also comprise an auxiliary, closable opening 19 that permits gas to be re-introduced into the tarpaulin. By letting air enter back into the tarpaulin, the insulation elements 11 will expand and thereby provide a better insulation characteristic.

While the apertures 13 through the barriers 7 shown in the attached drawings are relatively large, it shall be understood that the apertures 13 may be significantly smaller. To fulfill their purpose, the apertures 13 should be sufficiently large that one may pass the attachment means 15 through them.

In preferred embodiments, the apertures 13 should also permit gas to flow between the adjacent compartments 9, so that the compartments 9 may be evacuated or filled with gas even though the number of closable fluid interfaces 17 and auxiliary openings 19 is less than the number of compartments 9.

By letting the adjacent insulation elements 11 be connected to each other while being placed vertically above one another, it is ensured that the vertical extension of the insulation elements 11 is retained over time. As discussed above, if supporting the insulation elements 11 only from below, they tend to creep and thus have reduced vertical extension.

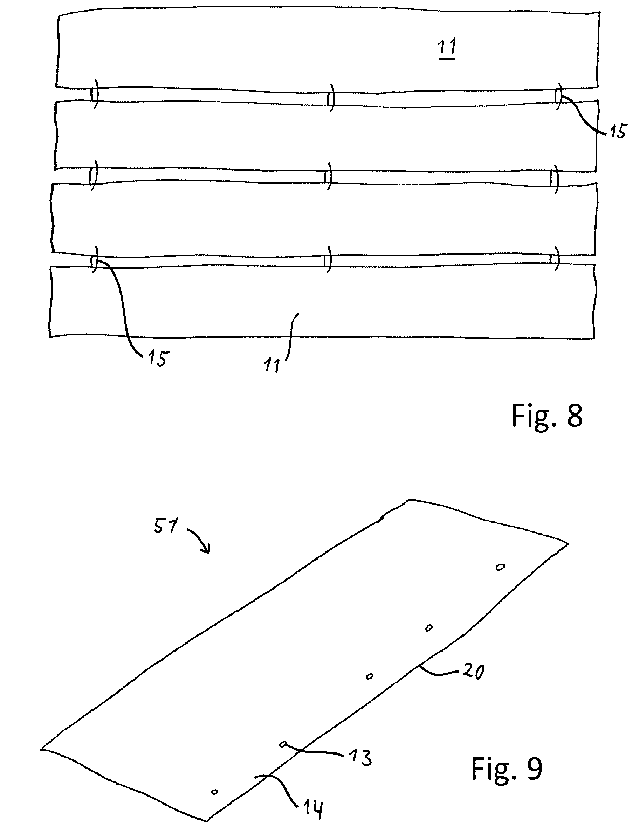

Fig. 8 schematically depicts some insulation elements 11 arranged vertically above one another, without the first and second sheets 3, 5 shown for illustrational purpose. As appears from Fig. 8, the upper part of one insulation element 11 is retained in its vertical position by the attachment means 15. In the shown embodiment, the attachment means are pieces of string that are guided through both the adjacent insulation elements 11.

As will be appreciated by the skilled person, the lower edge portion of one insulation element 11 rests on the lower barrier 7 of one compartment 9.

Advantageously, to provide a tarpaulin 1 with good insulating characteristics, the insulation elements 11 are arranged closer to one another than what is schematically shown in Fig. 8.

Fig. 9 depicts a perspective schematic view of a sheet piece 51 that can be used as a part of the second sheet 5 when joined together with other sheet pieces 51. In this embodiment, the apertures 13 are in the form of holes in the sheet. Advantageously, the holes are close to the sheet piece barrier edge 20. However, there must be sufficient sheet available close to the sheet piece barrier edge 20 so that one is able to attach the free end 14 to the first sheet 3 when assembling the tarpaulin 1.

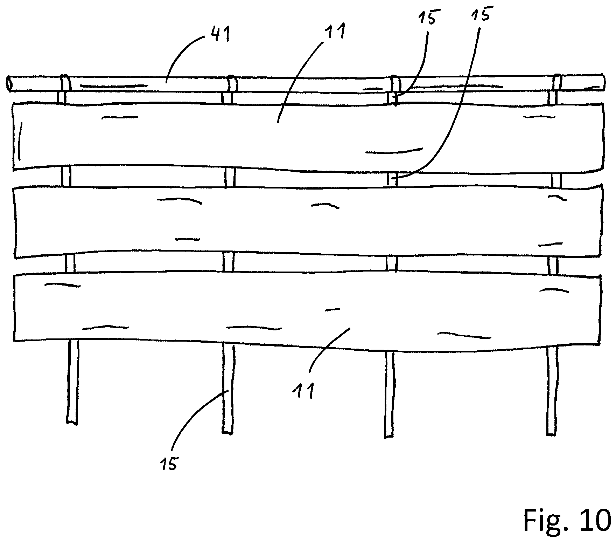

Fig. 10 depicts an alternative embodiment, where the attachment means 15 are in the form of long straps. As shown in Fig. 2, the tarpaulin 1 may comprise a bar edge 4. A bar 41 may be arranged at the bar edge 4, in such way that the first and second sheets 3, 5 may be stretched out from the bar 41. The rigid and straight bar 41 will in this manner retain a desired shape of the tarpaulin 1.

Fig. 10 illustrates a plurality of insulation elements 11 and the bar 41, without the first and second sheets 3,5 shown, for illustrational purpose. In this embodiment, a plurality of attachment means 15 in the form of straps are connected to the bar 41. The straps 15 extends across a plurality of insulation elements 11. In this manner, a plurality of insulation elements 11 may be connected to the bar 41. If arranged in a horizontal orientation, as shown in Fig. 1, the insulation elements 11 may thus be supported from the bar 41.

To attach the insulation elements 11 to the attachment straps 15, one may for instance provide the attachment straps 15 with Velcro. In that way, the manufacturer of the tarpaulin 1 may simply lay the insulation elements 11 directly onto the attachment straps 15 to provide the connection. In other embodiments, one may use a glue or other means. It shall be understood that the attachment straps 15 shown in Fig. 10 will extend through the apertures 13 in the barriers 7, such as shown in Fig. 3.

## Claims

1. An insulated tarpaulin (1) comprising a first sheet (3), a second sheet (5), barriers (7) located between and defining compartments (9) between the first and second sheets, and insulation elements (11) located in the compartments, and
-apertures (13) through the barriers (7);
-**characterized in that** it further comprises
- attachment means (15) that are extending through the apertures and that are connecting insulation elements to insulation elements located in other compartments.

2. An insulated tarpaulin (1) according to claim 1, **characterized in that** the second sheet (5) comprises a plurality of sheet pieces (51) joined together at a position having a distance from a sheet piece barrier edge (20) of the sheet pieces (51) where the apertures (13) are arranged.

3. An insulated tarpaulin (1) according to claim 2, **characterized in that** the apertures (13) are in the form of holes encircled by sheet material.

4. An insulated tarpaulin (1) according to claim 2, **characterized in that** the apertures (13) are formed as cutouts extending from the sheet piece barrier edge (20).

5. An insulated tarpaulin (1) according to any one of the preceding claims, **characterized in that** the insulation elements (11) are compressible, and that the insulated tarpaulin (1) comprises a closable fluid interface (17), through which gas can be evacuated out from the compartments (9).

6. An insulated tarpaulin (1) according to one of the preceding claims, **characterized in that** the insulation elements (11) are provided with a pre-attached attachment means (15).

7. An insulated tarpaulin (1) according to one of the preceding claims, **characterized in that** the attachment means (15) extend across a plurality of insulation elements (11).

8. An insulated tarpaulin (1) according to claim 7, **characterized in that** the attachment means (15) are connected to a bar (41) arranged at a bar edge (4) of the insulated tarpaulin.

9. A method of providing an insulated tarpaulin (1), which method comprises the following steps:
a) providing a first sheet (3);
b) arranging an insulation element (11) on the first sheet (3);
c) arranging a second sheet (5) on the insulation element (11), so that the insulation element is between the first and second sheets;
d) arranging a barrier (7) along an edge of the insulation element, the barrier extending between the first sheet and the second sheet;
e) arranging an additional insulation element (11) adjacent the previously arranged insulation element (11), such that the barrier (7) is interposed between the two insulation elements;
wherein the method further comprises the following step:
f) connecting the two insulation elements together with a plurality of attachment means (15) that extend from one insulation element, through apertures (13) in the barrier (7), to the other insulation element; and
g) arranging the second sheet on the additional insulation element (11).

## Patentansprüche

1. Isolierte Plane (1) mit einer ersten Folie (3), einer zweiten Folie (5), Barrieren (7), die zwischen der ersten und der zweiten Folie angeordnet sind und Fächer (9) bilden, und Isolationselemente (11), die in den Fächern angeordnet sind, sowie Öffnungen (13) durch die Barrieren (7);
**dadurch gekennzeichnet, dass** sie ferner umfasst
Befestigungsmittel (15), die sich durch die Öffnungen erstrecken und Isolationselemente mit Isolationselementen verbinden, die sich in anderen Fächern befinden.

2. Isolierte Plane (1) nach Anspruch 1, **dadurch gekennzeichnet, dass** die zweite Folie (5) eine Vielzahl von Folienstücken (51) umfasst, die an einer Position miteinander verbunden sind, die einen Abstand von einer Folienstück-Barrierekante (20) der Folienstücke (51) aufweist, an der die Öffnungen (13) angeordnet sind.

3. Isolierte Plane (1) nach Anspruch 2, **dadurch gekennzeichnet, dass** die Öffnungen (13) die Form von Löchern haben, die von Folienmaterial umgeben sind.

4. Isolierte Plane (1) nach Anspruch 2, **dadurch gekennzeichnet, dass** die Öffnungen (13) als Ausschnitte ausgebildet sind, die sich von der Folienstück-Barrierekante (20) aus erstrecken.

5. Isolierte Plane (1) nach einem der vorhergehenden Ansprüche, **dadurch gekennzeichnet, dass** die Isolationselemente (11) komprimierbar sind und dass die isolierte Plane (1) eine verschließbare Flüssigkeitsschnittstelle (17) aufweist, durch die Gas aus den Fächern (9) abgeleitet werden kann.

6. Isolierte Plane (1) nach einem der vorhergehenden Ansprüche, **dadurch gekennzeichnet, dass** die Isolationselemente (11) mit einem vormontierten Befestigungsmittel (15) versehen sind.

7. Isolierte Plane (1) nach einem der vorhergehenden Ansprüche, **dadurch gekennzeichnet, dass** sich die Befestigungsmittel (15) über eine Vielzahl von Isolationselementen (11) erstrecken.

8. Isolierte Plane (1) nach Anspruch 7, **dadurch gekennzeichnet, dass** die Befestigungsmittel (15) mit einer an einer Stangenkante (4) der isolierten Plane angeordneten Stange (41) verbunden sind.

9. Verfahren zur Herstellung einer isolierten Plane (1), wobei das Verfahren die folgenden Schritte umfasst:
a) Bereitstellen einer ersten Folie (3);
b) Anbringen eines Isolationselements (11) auf der ersten Folie (3);
c) Anordnen einer zweiten Folie (5) auf dem Isolationselement (11), so dass sich das Isolationselement zwischen der ersten und der zweiten Folie befindet;
d) Anordnen einer Barriere (7) entlang einer Kante des Isolationselements, wobei sich die Barriere zwischen der ersten Folie und der zweiten Folie erstreckt;
e) Anordnen eines zusätzlichen Isolationselements (11) neben dem zuvor angeordneten Isolationselement (11), so dass die Barriere (7) zwischen den beiden Isolationselementen angeordnet ist;
wobei das Verfahren außerdem den folgenden Schritt umfasst:
f) Verbinden der beiden Isolationselemente mit einer Vielzahl von Befestigungsmitteln (15), die sich von einem Isolationselement durch Öffnungen (13) in der Barriere (7) zu dem anderen Isolationselement erstrecken; und
g) Anordnen der zweiten Folie auf dem zusätzlichen Isolationselement (11).

## Revendications

1. Bâche isolée (1) comprenant une première feuille (3), une seconde feuille (5), des barrières (7) situées entre et définissant des compartiments (9) entre les première et seconde feuilles, et des éléments d'isolation (11) situés dans les compartiments, et des ouvertures (13) à travers les barrières (7) ; **caractérisée en ce qu'**elle comprend en outre des moyens de fixation (15) qui s'étendent à travers les ouvertures et qui relient des éléments d'isolation à des éléments d'isolation situés dans d'autres compartiments.

2. Bâche isolée (1) selon la revendication 1, **caractérisée en ce que** la seconde feuille (5) comprend une pluralité de pièces de feuille (51) réunies ensemble dans une position présentant une distance à partir d'un bord de barrière de pièces de feuille (20) des pièces de feuille (51) où les ouvertures (13) sont agencées.

3. Bâche isolée (1) selon la revendication 2, **caractérisée en ce que** les ouvertures (13) se présentent sous la forme de trous encerclés d'un matériau en feuille.

4. Bâche isolée (1) selon la revendication 2, **caractérisée en ce que** les ouvertures (13) sont réalisées sous la forme de découpes s'étendant à partir d'un bord de barrière de pièces de feuille (20).

5. Bâche isolée (1) selon l'une quelconque des revendications précédentes, **caractérisée en ce que** les éléments d'isolation (11) sont compressibles, et **en ce que** la bâche isolée (1) comprend une interface de fluide pouvant être fermée (17), à travers laquelle du gaz peut être évacué hors des compartiments (9).

6. Bâche isolée (1) selon l'une quelconque des revendications précédentes, **caractérisée en ce que** les éléments d'isolation (11) sont munis de moyens de fixation (15) pré-fixés.

7. Bâche isolée (1) selon l'une quelconque des revendications précédentes, **caractérisée en ce que** les moyens de fixation (15) s'étendent à travers une pluralité d'éléments d'isolation (11).

8. Bâche isolée (1) selon la revendication 7, **caractérisée en ce que** les moyens de fixation (15) sont reliés à une barre (41) agencée au niveau d'un bord de barre (4) de la bâche isolée.

9. Procédé de fourniture d'une bâche isolée (1), lequel procédé comprend les étapes suivantes consistant à :
a) fournir une première feuille (3) ;
b) agencer un élément d'isolation (11) sur la première feuille (3) ;
c) agencer une seconde feuille (5) sur l'élément d'isolation (11), de telle sorte que l'élément d'isolation se trouve entre les première et seconde feuilles ;
d) agencer une barrière (7) le long d'un bord de l'élément d'isolation, la barrière s'étendant entre la première feuille et la seconde feuille ;
e) agencer un élément d'isolation supplémentaire (11) adjacent à l'élément d'isolation (11) agencé précédemment, de telle sorte que la barrière (7) soit interposée entre les deux éléments d'isolation ;
dans lequel le procédé comprend en outre les étapes suivantes consistant à :
f) relier les deux éléments d'isolation ensemble avec une pluralité de moyens de fixation (15) qui s'étendent depuis un élément d'isolation, à travers des ouvertures (13) dans la barrière (7), vers l'autre élément d'isolation ; et
g) agencer la seconde feuille sur l'élément d'isolation supplémentaire (11).
